(19) Europäisches Patentamt

European Patent Office

Office européen des brevets

(11) **EP 0 578 015 B1**

(12) **EUROPEAN PATENT SPECIFICATION**

(45) Date of publication and mention
of the grant of the patent:
**09.12.1998 Bulletin 1998/50**

(51) Int Cl.$^6$: **G11B 7/00**, G11B 7/24

(21) Application number: **93109596.2**

(22) Date of filing: **16.06.1993**

(54) **Optical information recording medium**

Optisches Informationsaufzeichnungsmedium

Milieu d'enregistrement optique d'information

(84) Designated Contracting States:
**DE FR GB NL**

(30) Priority: **17.06.1992 JP 157728/92**
**17.06.1992 JP 157732/92**

(43) Date of publication of application:
**12.01.1994 Bulletin 1994/02**

(73) Proprietor: **MATSUSHITA ELECTRIC INDUSTRIAL
CO., LTD.
Kadoma-shi, Osaka-fu, 571 (JP)**

(72) Inventors:
• **Nagata, Ken'ichi
Nishinomiya-shi, Hyogo-ken (JP)**
• **Ohno, Eiji
Hirakata-shi, Osaka-fu (JP)**
• **Akahira, Nobuo
Yawata-shi, Kyoto-fu (JP)**

• **Nishiuchi, Ken'ichi
Moriguchi-shi, Osaka-fu (JP)**
• **Yamada, Noboru
Hirakata-shi, Osaka-fu (JP)**

(74) Representative: **Eisenführ, Speiser & Partner
Martinistrasse 24
28195 Bremen (DE)**

(56) References cited:
**EP-A- 0 197 256**      **EP-A- 0 360 466**
**EP-A- 0 376 678**      **GB-A- 2 061 594**
**GB-A- 2 084 786**

• **PATENT ABSTRACTS OF JAPAN vol. 10, no. 180
(P-471)24 June 1986 & JP-A-61 029 433 (NEC
CORP.)**
• **PATENT ABSTRACTS OF JAPAN vol. 17, no. 127
(P-1502)17 March 1993 & JP-A-04 307 441 (FUJI
PHOTO FILM CO. LTD) 29 October 1992**

**Description**

BACKGROUND OF THE INVENTION

The present invention generally relates to an optical information recording medium, and especially an optical disk capable of reproducing information recorded in high density with the use of laser beams or the like.

Generally, an art is known of focusing laser beams with a lens system and reproducing minute signal pits provided on a substrate with a diameter making an optical spot smaller in the order of the light wavelength thereof. It is put into practical use as a read only type (ROM = Read Only Memory) optical disk such as a compact disk (CD) or laser video disk (LVD). An optical phase change type optical disk using chalcogenide for a recording film material is put into practical use as a write once type (WORM = Write Once Read Many) optical disk capable of recording and reproducing signals or an optical disk rewritable capable of recording and reproducing, erasing operations of signals.

In a read only type optical disk, a signal track of small concave, convex pits are provided in advance on transparent disk substrate such as resin or the like with reflective film such as Al or the like being set on it. A scanning operation is effected on a signal track with optical spots with laser beams being focused in the reproducing operation of signals. Although the laser beams are reflected as they are in a location where pits do not exist and reach an optical detector, the laser beams hardly return to the optical detector, because the laser beams are diffracted with pits in a location where pits exist. The existence of the signal pits can be detected in accordance with the size of the reflective optical quantity.

In an erasable optical phase change type of optical disk, signal marks are formed with a crystal condition of a recording film material being generally made unrecorded in condition, and the recording film being melted and quenched with the application of the laser beams into a crystalline condition. The difference of the optical constants (refractive indexes, extinction coefficients) is used when the recording film is a non-crystalline condition or a crystalline condition, and the disk construction is so designed that the reflection light quantity with respect to the reproduction beam may change in accordance with the existence of the recording marks. Signals can be detected in accordance with the size of the reflective light quantity. In order to erase the signals, the recording film is raised at temperatures by the application of the laser beams of power lower than at the recording time so as to return the non-crystalloid mark portion.

As a recording film material, it is general to use a material which changes in optical phase between non-crystalloid - crystal with, for example, Te, In, Sb, Se or the like as principal components or a material which reversibly changes in optical phase between two types of different crystal construction. One of merits of optical change recording is in that information signals can be overridden with the use of a single laser beam only as a recording means. When the laser output is modulated in accordance with the information signal between two levels, recording level and erasing level, and is applied upon the recorded information track, the new signal can be recorded while the existing information signal is being erased (Japanese Patent Laid-Open Publication No.56-145530).

The write once type optical phase change optical disk also records and reproduces signals with the use of the reflection index of the recording portion and the non-recording portion.

It is proposed to decide the disk construction so that the structural phase change may be caused between the non-recording portion and the recording portion with respect to the wavelength λ of the reproduction laser beams (Japanese Patent Laid-Open Publication No. 3-41638, Japanese Patent Laid-Open Publication No. 3-157830). When the recording portion (recording mark) is read out with reflection index change, sufficient reproduction signal cannot be obtained without the area of the recording condition of the range sufficiently larger as compared with the size of the laser beams to be used for the reproduction. This is because the reflective beam light quantity is proportional to a value averaged with the respective area and the optical intensity distribution being weighted upon the reflection index of the recording mark and the reflection index of the peripheral unrecording region as the optical intensity of the reproduction beams is generally Gaussian distribution and is spread more externally than the optically phase changed recording mark. In the case of the structural phase change reproduction construction, the structural phase is different between the recording portion and the non-recording portion, and the reflection light quantity is changed with the structural phases being interfered with each other. The fact is used. It is desired that the reflection light quantity change be largest when the structural phase difference of the reflective beam in the recording portion and the non-recording portion is $(1 + 2n)\,\pi$ (n is an integer), and be closer to the value. The effect of interference is largest and therefore, the reflective light intensity change is larger when the reflection intensity from the recording portion is equal to the reflection intensity from the peripheral non-recording portion as the reflection beam intensity distribution of the reproduction beams. The reproduction signal can be provided larger when the recording marks are smaller than the size of the reproduction beam. Thus, the signal quantity is provided larger, namely, higher density recording operation can be effected from the above description with the recording mark of the area where the structural phase change reproduction construction is smaller than the reflection index change reproduction construction when the reproduction operation is effected with the same reproduction optical beam.

Even either of the read only type, the write once type, the erasable type in the conventional optical disk, the limit of the recording density is determined by how small signal marks can be detected with light spots irised up to the wavelength limit. The size of the light spots is determined by the wavelength of the laser beam and the numerical aperture (NA) of the objective lens for irising the laser beam. The light spot can be irised smaller, as the wavelength of the laser beam is shorter or the numerical aperture of the objective lens becomes larger. The improvement in the recording density can be effected with the development of short wavelength laser, and the larger numerical aperture of the objective lens being made larger, with a problem that remarkable technical renovation is required, which cannot be realized easily.

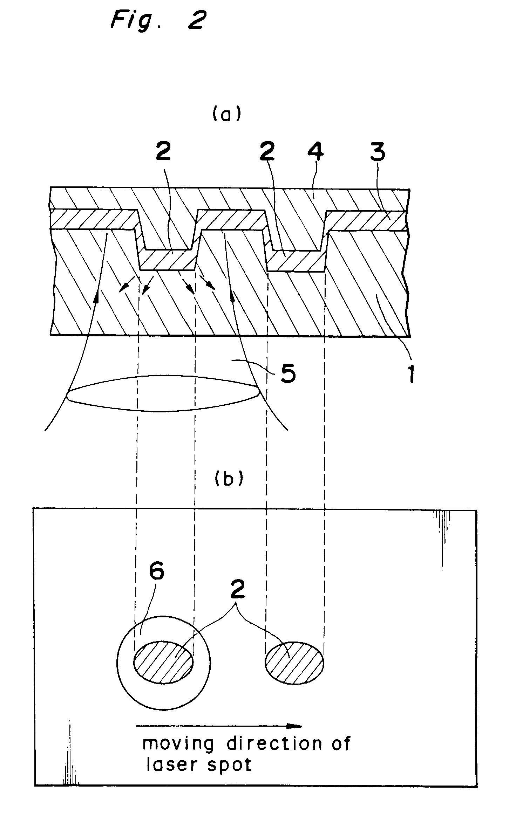

One embodiment of the construction of the recording medium of the conventional read only type is shown in Fig. 2. (a) is a sectional view and (b) is a plan view. A signal is stored on the substrate 1 as concave, convex recording pits 2 with a reflective layer 3 such as Al or the like being formed on it, and overcoat 4 for protecting the signal recording face being further provided on it.

The reproduction of the signal is effected with the scanning operation on the recording pit with laser spot 6 with the laser beam 5 having been irised up to the wavelength limit. The reflection beam from the recording medium directly returns to a light detector in a region where recording pits do not exit. As the reflection beam from the recording pit is different in phase from the reflection beam from the periphery of the recording pit in a region where the recording pits exist, the reflection beam from the recording pit is diffracted and cannot return the optical detector. As the reflection light quantity for reaching the light detector is different in accordance with the existence of the recording pit, the recording signal can be detected.

The diffraction effect of the reflection beam by the recording pit largely depends upon the depth and the shape of the recording pit.

Changes in the depth of the recording pit changes the structural phase difference of the reflection beam by the existence of the recording pit. The structural phase difference of the reflection beam for obtaining the large diffraction effect is $\pi$, and thus, the pit depth becomes $\lambda / (4n)$ (where $\lambda$ is the wavelength of the reproduction beam, n is the refractive index of the substrate). Where, for example, the wavelength of the reproduction beam is 780 nm, the pit depth becomes 780 nm ÷ 1.58 ÷ 4 = 123 nm if the refractive index (for example, 1.58) of the substrate is taken into considered, and the largest amplitude at this time is obtained. As the laser spot follows the recording pit string in the actual optical disk, the depth is approximately 100 nm, considering the tracking performance.

The size of the recording pit is determined, because the largest diffraction effect is obtained when the reflection light quantity from the recording pit and the reflection light quantity from the periphery thereof are approximately the same.

The Japanese patent application JP-A-61029433 discloses an optical disc having a substrate with pits and a layer having a higher dielectric constant than said substrate. The track detecting sensitivity is deteriorated by the variation of the phase difference owing to formation of a recording pit and also by the deterioration of the reflected light quantity itself with a recording medium having the deterioration of the reflectance at a pit position. The European patent application EP-A-0 360 466 discloses an optical information recording medium having a thin film material formed on a substrate, the optical constant of which film material is changed with application of a light beam so that the optical phase of reflected or transmitted light of incident light is changed between before and after the change of the optical constant. A signal is reproduced by detecting a change in the overall quantity of the reflected or transmitted light due to this optical phase change. The reflectivity of recorded regions and the reflectivity of non-recorded regions are more or less equal.

## SUMMARY OF THE INVENTION

Accordingly, the present invention has been developed with a view to substantially eliminating the above discussed drawbacks inherent in the prior art, and for its essential object to provide an improved optical information recording medium.

Another important object of the present invention is to provide an improved optical information recording medium where recording density capable of reproduction is improved without making shorter the wavelength of the reproduction light, and making the numerical aperture of the objective lens larger in the optical disk.

In accomplishing these and other objects, according to one aspect of the present invention an optical information recording medium for use with an apparatus for reproducing information by the application of a laser beam having a predetermined wavelength comprises a substrate with prerecorded pits and a reflection layer coated on top of said substrate, the reflectivity of the interior of the pits being higher than the reflectivity of the rest of the surface at the wavelength of the laser beam used for reproducing the information, wherein the reflection layer film of the interior of the pit is thicker than the reflection film of the periphery thereof.

The reflection light quantity from the recording pit can be made as approximately equal as the reflection light quantity from the periphery thereof with recording pits smaller than before in such construction as described hereinabove. The recording signals formed with pits smaller than before can be reproduced even if the size of the optical spot is the same, thus improving the recording density.

According to another aspect of the present invention an apparatus for recording and reproducing information with the application of laser beams of a given wavelength and an optical information recording medium for use with the apparatus is provided, said optical information recording medium being provided with a substrate, at least a protective layer, and a recording film which is susceptible of undergoing an optical phase change on the application of a laser beam, said change involving a shift in the optical constants (refractive index n, extinction coefficient k) of the recording film, and said medium being such that the phase difference between a reproducing laser beam reflected from a unrecorded region and a reproducing laser beam reflected from a recorded mark region of the optical information recording medium lies within the range (0.5 through 1.5)*π + 2i*π, where i is an integer, characterized in that the reflection index R1 of the recorded mark region of the optical information recording medium is at least 1.3 times the reflection index R2 of the unrecorded region at the wavelength of the laser beam for reproducing the recorded information.

Preferably, it is assumed that the range of the structural phase difference of the reflection beams in the non-recording region and the recording mark region is

$$(2n + 1)\,\pi \qquad n: integer$$

R1 is 1.3 multiple or more of R2 and R2 is preferably ≤ 15 %. In the erasable type of optical phase change optical disk, it is desired that the recording film material be composed of a material with Ge - Sb - Te being a principal component and the thickness of the recording film be 40 nm or lower. Further preferably, it is desired that the composition ratio of the principal component be within the range represented by

$(Ge) x (Sb) y (Te) z$

$$0.10 \leq y \leq 0.35 \qquad 0.10 \leq y$$

$$0.45 \leq z \leq 0.65 \qquad x + y + z = 1$$

Further preferably the composition ratio of Ge, Sb, Te be desirable within the range represented by

$(Ge_2Sb_2Te_5) x (GeSb_2Te_4) 1\text{-}x$

$$0 \leq x \leq 1$$

With such construction as described hereinabove, the same signal amplitude is obtained by the formation of a smaller recording mark as compared with the disk of the same construction between the reflection index R1 and the reflection index R2. The high density can be realized, because the recording mark can be made small without deterioration in the signal quality. At the same time, the erasing characteristics - especially the erasing power tolerance can be improved. As the recording mark can be made smaller, thermal load to be applied upon the recording medium is reduced as compared with the larger recording mark, in the repetition of the recording/erasing operations, so that the repeating characteristics of the better record/erasing operations can be obtained.

According to the present invention the reflection index of the interior of the recording pit is raised higher than the reflection index of the periphery so that the higher density is achieved. The reflection index of the interior of the recording pit is raised higher than the peripheral reflection index so that the reflection light quantity from the recording pit can be made approximately the same as the reflection light quantity from the periphery thereof by the recording pits smaller than before. The same signal amplitude as before is obtained by the recording pit smaller than before if the laser spot diameter is the same, so that the signal reproducing operation from the medium recorded with higher density can be effected.

## BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a cross sectional view and a plane view showing exemplary the construction of a first embodiment of the present invention;

Fig. 2 is a cross sectional view and a plane view showing exemplary the construction of the conventional embodiment;

Fig. 3 is a graph showing the relation between the film thickness of Au and the reflection index when the Au film has been formed on a polycarbonate substrate;

Fig. 4 is a graph showing the recording pit length dependence of the reproduction signal amplitude in the construction of the first embodiment;

Fig. 5 is a cross sectional view showing exemplary the construction of the second and third embodiments of the present invention;

Fig. 6 is a graph showing the thickness of the recording film for constructing the recording medium, and the transmission index in the embodiment of the present invention;

Fig. 7 is a chart for explaining the relation between the size of the reproduction beam focused on the recording film and the shape of the recording mark so as to cause the optimum structural phase difference reproduction;

Fig. 8 is a view showing a method of measuring the structural phase difference of the sample;

Fig. 9 is a graph showing the relation between the recording mark area and the reproduction amplitude; and

Fig. 10 is a chart showing the range of the principal component of the recording film with Ge-Sb-Te being principal components.

## DETAILED DESCRIPTION OF THE INVENTION

Before the description of the present invention proceeds, it is to be noted that like parts are designated by like reference numerals throughout the accompanying drawings.

(Embodiment 1)

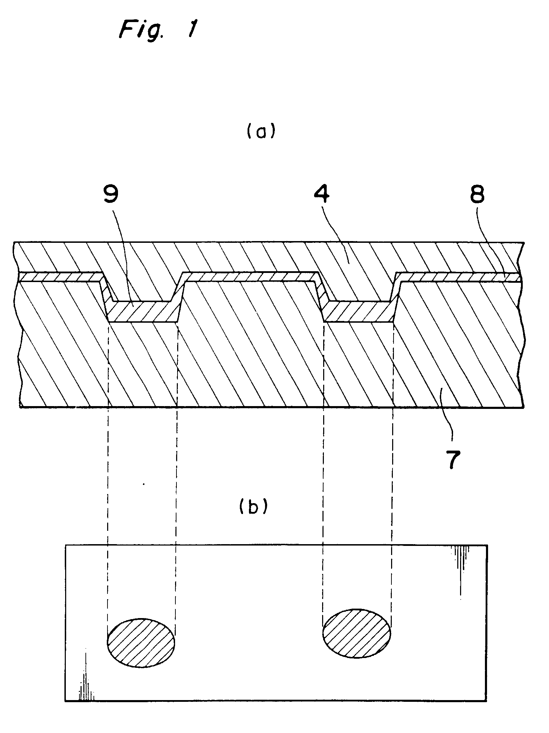

Fig. 1 shows a sectional view in one embodiment of an optical disk construction in accordance with the present invention. A substrate 7 is a polycarbonate substrate of 120 mm in diameter, 1.2 mm in thickness. A recording pit 9 of a signal of approximately 330 nm in depth is formed on the surface, and further a reflection layer 8 made of Au is provided. The present disk is characterized in that the film thickness of the reflective layer in the recording pit interior portion is larger than that of the periphery thereof.

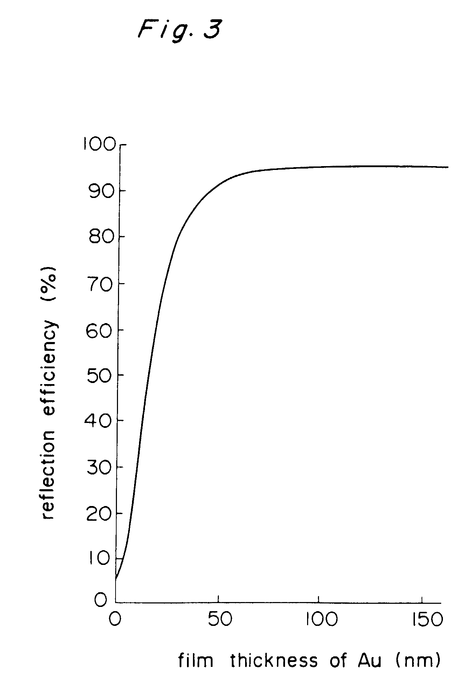

Fig. 3 shows the relation between the film thickness of Au and the reflection index in the wavelength 780 nm when an Au film is formed on a plane shaped polycarbonate substrate. As the film thickness of Au becomes larger, the reflection index increases monotonously. In the present embodiment, in order to raise the reflection index of the recording pit interior higher than the periphery thereof, the film thickness of the recording pit interior is selected to 45 nm (reflection index approximately 90 %), the film thickness of the recording pit periphery is 13 nm (reflection index approximately 45 %). Au of a uniform thickness is formed on the substrate to make the film thickness of the Au film different on the inside and outside of the recording pit. Continuously, an ion beam or the like is applied from an angle of desirably 30° or lower continuously in the oblique direction of the substrate so as to etch the Au film. The etching rate of the pitch interior can be made lower than the etching rate of the pitch exterior with the use of a fact that the pitch interior becomes the shadow of the incident beam at this time. The thickness of the Au film can be changed in the inside and outside of the pitch. Although the pit depth of the substrate is often set near the $\lambda / 4n$ ($\lambda$: the wavelength of the reproduction beam, n: refractive index of the substrate) in the normal ROM disk, it is effective to set as deep as approximately $3\lambda / 4n$ so that the shadow may be formed with respect to the incident beam in the etching operation of the pit bottom. It is important to rotate the substrate during the etching operation so that the incident direction of the etching beam may not be constantly fixed with respect to the substrate.

In order to check the signal reproduction characteristics of such an optical disk, an optical disk with the length of the recording pit being changed is made, with the pitch of the recording pit being made 2 $\mu$m, so as to check the relationship of the length of the recording pit and the reproduction signal. An optical disk with the film thickness of Au reflection layer being uniformly provided by 45 nm is made, for comparison with the conventional embodiment, so as to obtain the reproduction characteristics . The laser wavelength of the signal reproduction apparatus is made as constant as 780 nm in the laser wavelength of the signal reproduction apparatus, and as 5 m/s in the relative speed of the laser beam and the optical disk.

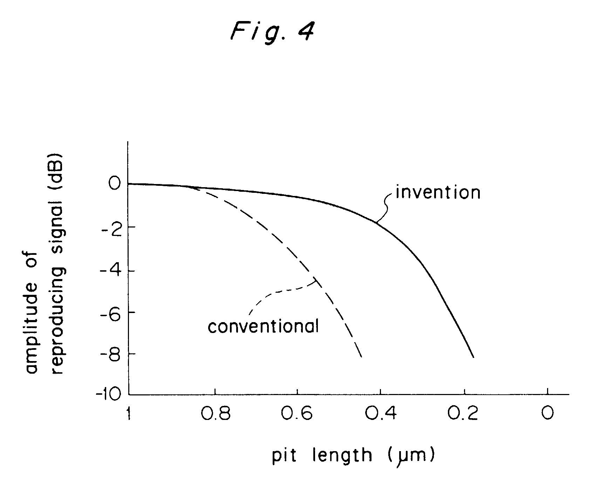

Fig. 4 shows the recording pit length dependence of the reproduction signal amplitude. The reproduction signal amplitude is standardized at a value of 1 $\mu$m in the recording pit length. Although the reproduction signal amplitude abruptly becomes smaller when the recording pit length becomes short in the conventional construction, it is found out in the optical disk of the present invention that the large reproduction signal amplitude is obtained even at a smaller reproducing pit.

As the same reproduction signal as in the conventional embodiment is obtained even in the recording signal recorded with the recording pit smaller than before in accordance with the present invention, it can produce the signal recorded in higher density than before.

Although Au is adopted as the reflection layer material in the present embodiment, metals such as Al, Ti, Ni, Cr, Cu, Ta and so on or an alloy with the metals being principal components may be adopted.

Although the reflection layer film of the recording pit interior is adapted to be made thicker so as to make the reflection index of the recording pit interior higher than the reflection index of the periphery thereof in the present embodiment, it is possible to realize as in other embodiment by the adoption of the different reflection layer material in the interior of the recording pit and the periphery thereof. Similar effects can be obtained even with, for example, the recording pit interior being made Au : 50 nm (approximately 93 % in reflection index) with the periphery thereof being made NiCr : 50 nm (approximately 55 % in reflection index).

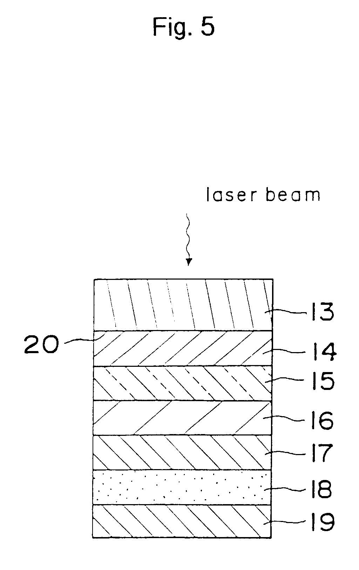

The representative construction example of the recording medium of the present invention will be described in Fig. 5. The laser beam for effecting the recording, reproducing and erasing operations is made become incident from the side of the substrate 13.

Resin such as PMMA, polycarbonate or the like, or surface smoothing things such as glass or the like is used as a substrate 13. In the case of the optical disk, the normal substrate plane 20 is covered with spiral for guiding the laser beam, eccentric continuous groove (track) or concave, convex of pit string or the like.

A material of the protective layers 14, 16 is stable physically and chemically, namely, higher at melting point and softening temperature than the melting pint of the recording material and is desired not to effect solid solution with the recording material. It is composed of dielectrics of, for example, $Al_2O_3$, $SiOx$, $Ta_2O_5$, $MoO_3$, $WO_3$, $ZrO_2$, ZnS, AlNx, Bn, SiNx, TiN, ZrN, $PbF_2$, $MgF_2$ or the like or their proper combinations. The protective layer is not necessary to be transparent. It may be composed of ZnTe having a light absorbing property with respect to, for example, visual light ray and infrared rays. The protective layers 14, 16 which are composed of different materials, have advantages in that the free degree of the thermal and optical disk designing becomes larger. It is needless to say that it may be composed of the same material.

The recording film 15 is composed of a material which reversibly effects the structure construction between the crystal condition and non-crystalline condition, for example, optical phase change material with, for example, Te or In, Se or the like being a principal component. Te-Sb-Ge, Te-Ge, Te-Ge-Sn, Te-Ge-Sn-Au, Sb-Se,. Sb-Te, Sb-Se-Te, In-Te, In-Se, In-Se-Tl, In-Sb, In-Sb-Se, In-Se-Te or the like are enumerated as principal component of a well known optical phase change material. Although these films are normally formed in non-crystalline condition, energies of laser beam or the like are absorbed into crystals and change in optical constants (refractive index n, extinction coefficient k).

A reflection layer 17 is made of metallic elements such as Au, Al, Cu, Ni, Cr and so on, or an alloy with these elements being principal components, and functions to improve the optical absorbing efficiency into the recording film. For example, the recording film 15 is made thicker so as to improve the optical absorbing efficiency so that the reflection layer 18 is not provided in construction. The optical absorbing efficiency can be improved as a whole, if the film thickness per the recording film layer is thin, by a plurality of alternate recording film and protective layer stacked construction.

The protective substrate 19 is formed with resin spin coated, with a pasting operation of resin plate similar to substrate, glass plate or metallic plate and so on with the use of a bonding agent 18. It may be constructed to be recorded, reproduced, erased from both the sides with the pasting operation of two units of recording media by a bonding agent with an intermediate substrate or the reflection layer being made inside.

The recording film, the protective layer are normally formed with an electron beam evaporation method, a sputtering method, an ion plating method, a CVD method, a laser sputtering method or the like.

The recording film 15 is selected into such thickness as one portion of the incident light ray can transmit through the recording film 15 even at a time when the recording film 15 is in a crystal condition. A transmission index is considered when the above described optical phase change material film (crystalline phase) is grasped with protective layers (thickness is assumed as infinite) of the same material quality as the dielectric film layers 14, 15. It is important to select the film thickness so that the value may become at least 1 % or more, preferably about 2 through 3 % or more. The component to be re-incident into the recording film 15 is removed with by the reflection with a reflection layer 17 and the interference effect of the light becomes smaller. It becomes difficult to control the optical path length, reflection index of the whole medium, the absorption in the recording film and so on even if the film thickness of the second dielectric film layer 16 and the reflection layer 17 is somewhat varied.

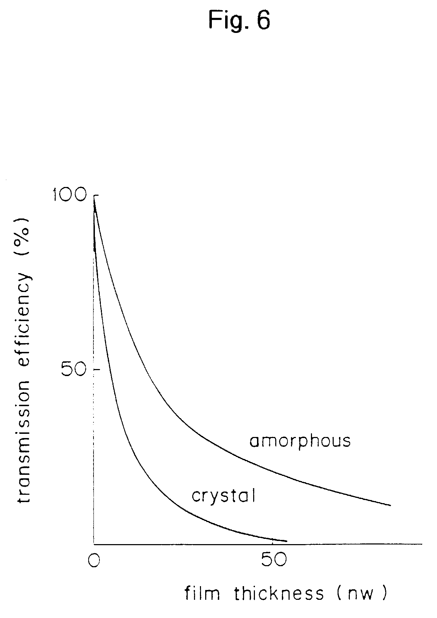

Fig. 6 shows the relation between the film thickness and the transmission index (wavelength 780 nm) when $Ge_2Sb_2Te_5$ is grasped with a ZnS - $SiO_2$ mixture ($SiO_2$ : 20 molar %) film as a representative recording film composition. It is found out from the drawing in the case of the crystal condition that transmission index is 1 % or more if the film thickness is 60 nm or lower, 2 % or more if it is 50 nm or lower, 3 % or more if it is 40 nm or lower.

The film thickness of first and second protective layers 14, 16 is determined as follows. Complex refractive index of a material for constructing each layer is obtained by a normal method (for example, a method of forming a film on a glass plate, calculating to the original the measuring value of the film thickness, the reflection index, the transmission index or a method of using elipso meter). Then, the film thickness of first and second dielectrics is obtained with calculation by a matrix method (for example, see chapter 3, 1971, IWANAMI SHOTEN, "Surge Optics" written by Hiroshi KUBOTA) with the recording film 15 and a reflection layer 17 being fixed in thickness. Concretely, the incomings and outgoings of the optical energies are calculated in accordance with the energy preservation rule with respect to all the surfaces including the surfaces with film thickness of the respective layer being assumed. Namely, an equation of the incomings and outgoings about the respective surfaces in the multi-medium is established. The optical path length with respect to the incident beam (actually the wavelength $\lambda$ to be used for the reproduction of the information), the intensity of the transmission beam, the intensity of reflection beam and the absorption quantity at each layer can be obtained with the solution of the obtained simultaneous equation. By the above described calculation in either case in the crystal condition of the recording film and an amorphous condition, the structural phase difference of the reflection beam of the non-recording region (normal crystal condition) and the recording mark region (normal non-crystalline condition) with respect to the reproduction beam of the wavelength $\lambda$, the reflection index change $\Delta R$ between both the regions, the absorption difference of both the regions in recording film can be known. In the present invention, the range of the structural phase difference of the reflection beam between two conditions is

$$(0.5 \text{ through } 1.5) \, \pi + 2n\pi \qquad n : \text{integer}$$

and the reflection index R1 of the recording mark region is made at least 1.3 times larger than the reflection index R2 of the non-recording region with respect to the wavelength $\lambda$ of the laser beam for reproducing the recorded information. If the structural phase difference between both the regions is

$$(0.5 \text{ through } 1.5) \, \pi + 2n\pi \qquad n : \text{integer}$$

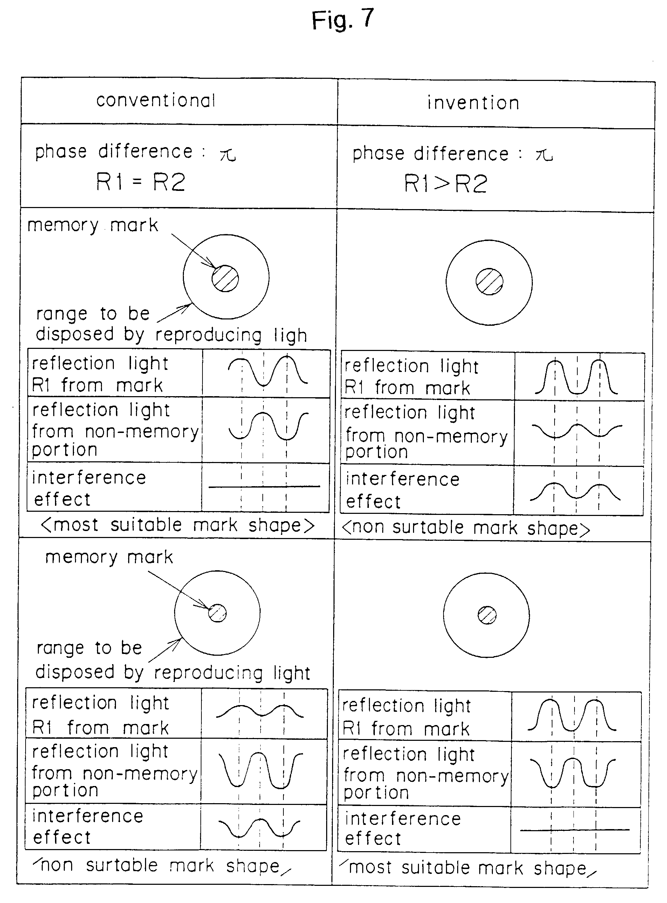

the structural phase difference reproduction can be sufficiently realized. As the R1 of the reflection index of the recording mark is larger than the reflection index R2 of the non-recording region, the area of the recording mark for causing the optimum structural phase difference reproduction becomes smaller than the recording mark area the optimum structural phase difference reproduction causes in the case of R1 < R2 or R1 = R2. Fig. 7 shows a model of it.

In Fig. 7, in the left line there shows a conventional construction of such a case of having a phase difference $\pi$ between the record mark of non-crystalline and the non-record portion, and both reflection rates of R1 and R2 being the same with each other. On the comparison between the dimension of record mark shape and the range of applying reproducing light, the view of left line at upper column shows the dimensions of record mark to be generated the phase difference light at the most efficiency. In the case, the amplitudes of reflection lights between the reproducing light from the record mark and the reproducing light from the periphery of the record mark are same to the other, and the interference between them becomes maximum. If the record mark becomes smaller than the shape of the most suitable mark as shown in a view of left line at lower column, the amplitude of reflection light from the periphery of record mark becomes larger than that of reflection light from the record mark, and the interference effect between the both reflection lights is insufficient, resulting in that the signal amplitude between the record portion and non-record portion becomes small. On the other hand, in the right line that shows a construction having a phase difference $\pi$ between the record mark and non-record portion, and both reflection rates of R1 and R2 being defined as R1 > R2. At this time, the dimension of record mark for generating the phase difference reproducing at the most efficiency is smaller than the record mark generated in the conventional construction the phase difference with the most efficiency as shown with a view of left line at lower column. If the dimension of record mark having the construction of the present invention is designed with the same dimension of the record mark in the conventional construction which can generate the phase difference reproducing at the most efficiency as shown with a view of left line at upper column, the amplitude of reflection light from the record mark becomes larger than that of reflection light from the periphery of record mark, and the interference effect between the both reflection lights is so insufficient that the signal amplitude between the record portion and non-record portion becomes small.

It is important to correctly make the correct disk construction design by the already described method or the unique disk construction obtained from the results with the construction design concept being different from the conventional reflection index difference reproduction construction in the independent selection of the structural phase difference and the reflection index change of the reflection beam between conditions with the above described conditions being filled.

Whether or not the recording medium is made as designed can be verified through the comparison with the precalculated value with the measurement, with the use of a spectrum meter, of the reflection index, the transmission index of the made medium. Although the absorption with the recording film and the absorption with the reflection layer cannot be measured directly, the accuracy can be improved with the same comparison by 2 wavelengths or more. The structural phase change amount of the recording portion and the non-recording portion can be obtained by the observation, by the interference film thickness meter or the like, of how the interference stripes of the light of the wavelength the same as the wavelength of the reproduction beam are shifted between the recording portion and the non-recording portion.

Fig. 5 shows the disk construction in one embodiment of the present invention. The material quality of the substrate is smooth polycarbonate which is not provided with the grooves. The disk is sandwiched in the dielectric protective layer composed of ZnS - 20mol % on both the sides thereof with the film thickness of the recording film being 15 nm. Gold (Au) is used for a reflection layer material and the film thickness is 51 nm. Table 1 is an optical constant with respect to 780 nm in wavelength.

Table 1

| Material Quality | Optical Constants (Refractive Index n, Extinction Coefficient k) | |
|---|---|---|
| Policarbonate | 1.58 | 0.0 |
| ZnS-20mol%SiO$_2$ | 2.10 | 0.0 |
| Ge$_2$Sb$_2$Te$_5$ (Non- Crystalloid) | 4.52 | 1.30 |
| Ge$_2$Sb$_2$Te$_5$ (Crystal) | 5.51 | 3.40 |
| Au | 0.18 | 4.64 |

Table 2 shows the film thickness of the substrate side protective layer, the film thickness of the reflection layer side protective layer, the reflection index R1 in the non-crystalline condition, the reflection index R2 in the crystal condition, the structural phase difference between both conditions about some samples among the sampled used in experiments. The optical characteristic is a value with respect to the wavelength 780 nm.

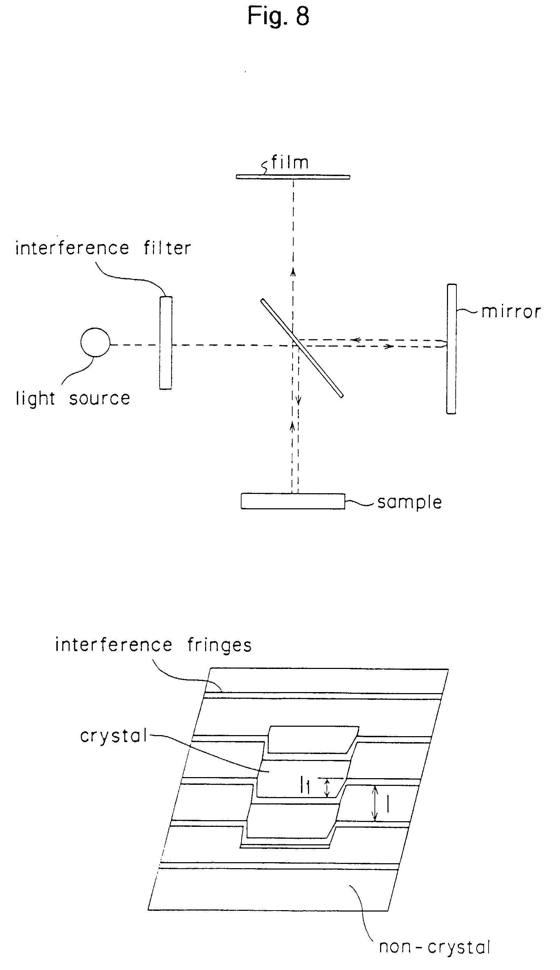

The actual measurement values of the reflection index are obtained with the use of a spectro-photometer. The crystallizing processing operation is effected in nitrogen for ten minutes at 250°C. A measuring method of the structural phase difference of the sample will be described hereinafter. One portion region of the sample piece is crystallized with semiconductor laser and is made up with the non-crystalline region and the crystal region in adjacent relation. Then, interference stripes are formed with the multiple interference method. The interference stripes of the light (here 780 nm) of the wavelength the same as the reproduction beam supposed in the designing operation are made on the sample, with, for example, the use of Michelson interference film thickness meter. The interference stripe is photographed with the use of the infrared rays film. When the structural phase difference is provided between both the regions, the interference stripes are not made linear, thus causing discontinuous stage difference as in Fig. 8 in the boundary portion. A structural phase difference is obtained from the shift amount $l_1/l$. It is found out that the sample of the construction which is approximately the same as the design is obtained.

Table 2

| Sample No. | Substrate Side Film Thickness | Reflection Layer Side Film thickness | R1(%) Design/ Actual Measurement | R2(%) Design/ Actual Measurement | Structural Phase Difference Design/Actual Measurement |
|---|---|---|---|---|---|
| 1 | 116nm | 23nm | 7/8 | 7/7 | 0.84π/0.8π |
| 2 | 116nm | 35nm | 7/7 | 8/7 | 1.14π/1.0π |
| 3 | 116nm | 58nm | 14/13 | 11/10 | 1.50π/1.5π |
| 4 | 174nm | 12nm | 4/4 | 20/22 | 0.50π/0.5π |

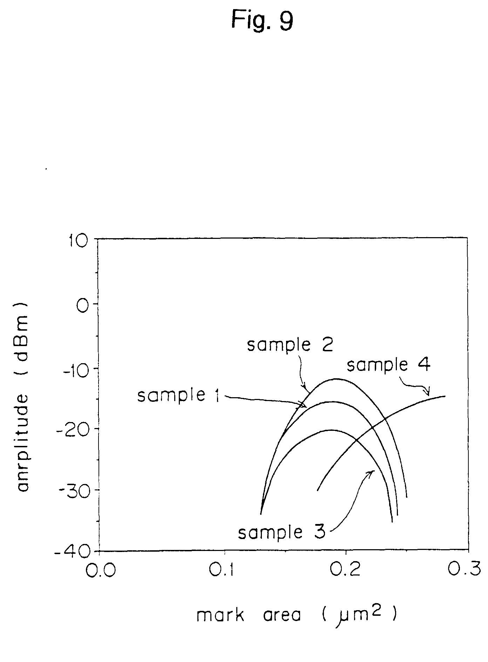

An initializing (crystallizing) processing operation is effected on the whole recording film face by an initializing apparatus using an Ar laser in advance upon these media. Thereafter, the medium is rotated at a linear speed 10m / s so as to apply the semiconductor laser beam of 780 nm in wavelength, focusing on the recording film with irising by a lens system of 0.5 in aperture number. Light modulated with 50 % in modulation degree, 10 MHz in single frequency with various power is applied upon the recording film face so as to effect a recording operation while the recording film is being partially non-crystallized, apply a continuous output of 1mW for detecting the reflection beams with a photodetector to reproduce it. As a result, the reproduction signal amplitude is observed. The recorded/reproduced disk is dismantled and the shape of the recording mark is checked with the use of a transparent electronic microscope. The shape of the recording mark is different with the recording power. Fig. 9 shows the relation between the recording mark area and the reproduction amplitude in each sample. The following are found out from Fig. 9.

1) As clear from the comparison between the samples 3, 4, the structural phase difference, between the non-crystalline portion and the crystal portion, which is closer to the $\pi$ can take larger maximum signal amplitude in the case of the same reflection index. The area to be obtained in the maximum signal amplitude is the same in both the samples.

2) As clear from the comparison of the samples 3, 4, the larger signal amplitude can be obtained with smaller mark shape as compared with the sample 4 (reflection index of the crystal portion is larger than the reflection index of the non-crystalline portion) in the sample 3 where the reflection index of the non-crystalline portion is larger than the reflection index of the crystal portion when there is equivalently the same structural phase.

The following are clear from the relation between the structural phase difference between the non-crystalline region of the recording medium and the crystal region, and the relation of the reflection indexes of both thereof.

1) The largest signal amplitude is obtained when the structural phase difference is the $(1+2n)\,\pi$ (n is integer) if samples the same in the reflection index are compared with. If the structural phase difference is in a range of $(0.5$ through $1.5)\,\pi + 2n\pi$, the signal amplitude of approximately 60% or more of the maximum signal amplitude when the structural phase difference is the $(1+2n)\,\pi$. This is sufficiently practical value. The signal amplitude becomes extremely small at the structural phase difference of $(1.5$ through $2.5)\,\pi + 2n\pi$.

2) The samples the same in the reflection index in the crystal condition are compared with in the range of $(0.5$ through $1.5)\,\pi + 2n\pi$ in the structural phase difference and in the same structural phase difference. As the reflection index of the non-crystalline portion becomes higher than the reflection index of the crystal portion, the area of the recording mark where the maximum amplitude is obtained becomes small. At this time, the value of the maximum amplitude is not known. The reflection index of the non-crystalline portion is made to be higher in construction than the reflection index of the crystal portion so as to raise the recording density. As the difference of the reflection index of the crystal, the non-crystalloid is larger, the larger signal amplitude is obtained with small recording mark. The maximum signal amplitude becomes maximum when the phase difference is $(1 + 2n)\,\pi$. When the reflection index of the non-crystalloid is 1.2 times the reflection index of the crystal, the area of the recording mark showing the same maximum signal amplitude becomes approximately 95 % as compared with a case where both the reflection indexes, substantial contribution towards the higher density is small. When, in accordance with the invention, the reflection index of the non-crystalloid is 1.3 times as many as the reflection index of the crystal, the area of the recording mark showing the same maximum signal amplitude becomes approximately 80 percent as compared with both the reflection indexes, thus showing sufficient contributions towards higher density.

When the reflection index R2 of the crystal condition is too small, the amplitude of the reproduction signal becomes too small to be convenient. When the reflection index R2 in the crystal condition becomes too large, the optical absorption quantity in the recording film becomes smaller, and the sensitivity becomes extremely low. It is found out through various experiments that no problems are caused when R2 is made 8 % or larger and made smaller 60 % or smaller.

3) The samples the same in the reflection index of the crystal condition are compared with in the range of $(0.5$ through $1.5)\,\pi + 2n\pi$ in the structural phase difference and in the same structural phase difference. As the reflection index of the non-crystalline portion is higher than the reflection index of the crystal portion, the repeating number of the recording/erasing operations become more.

4) The recording mark of the same area is formed, thereafter various power is continuously applied to crystallize the recording mark and to erase the signals. The erasing index is measured. The samples the same in the reflection index of the crystal condition is compared with in the range of $(0.5$ through $1.5)\,\pi + 2n\pi$ in the structural phase difference, and in the same structural phase difference. As the reflection index of the non-crystalline portion is higher than the reflection index of the crystal portion, it is found out that the range of the erasing power which becomes an erasing index (for example, -20 dB) of the constant erasing index or more is spread, namely, the erasing power range become spread.

The composition range of the recording film is spread and crystallizing/non-crystallized sensitivity, repeating characteristics are all better. In the structural phase difference reproduction, such disk construction as the recording density, the erasing characteristics, the recording/ erasing repeating characteristics may be improved by the higher reflection index of the non-crystalline portion than the reflection index of the crystal portion is checked. The construction that as the results of the experiments, the crystallizing/non-crystallizing sensitivity is both better (heating time necessary for crystallization is 100 nsec or lower, considering the superposed writing with a single beam), and better recording/ erasure repeating characteristics are obtained exists when the composition range of the Ge-Sb-Te principal components is

(Ge) x (Sb) y (Te) z

$$0.10 \leq x \leq 0.35 \qquad 0.10 \leq y$$

$$0.45 \leq z \leq 0.65 \qquad x=y+z=1$$

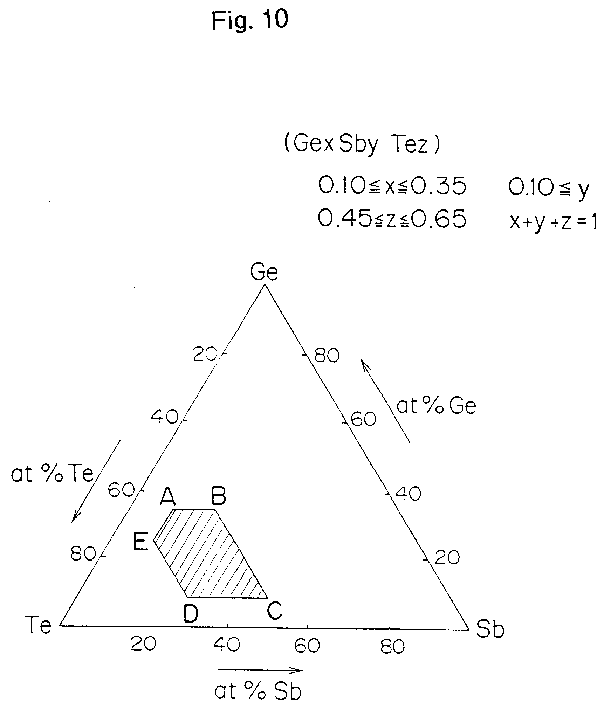

The composition range of the Ge-Sb-Te principal components is a range surrounded by A, B, C, D, E of Fig. 10.

The Ge-Sb-Te composition range of the recording film principal component is checked in further detail. The recording film composition of a range to be represented by

$$(Ge_2Sb_2Te_5) \, x \, (GeSb_2Te_4) \, 1-x$$

$$0 \leq x \leq 1$$

is fast especially in the crystallizing speed, and at the same time, the repeating recording/erasing characteristics are better. In the recording medium having the recording film composed of these compositions, the combination effect with the present invention which can achieve the higher density is larger.

When the thickness of the recording film is experimentally checked from a point view of the recording /erasing repeating characteristics, the better repeating characteristics cannot be obtained unless the recording film thickness is 40 nm or lower in the case of the disk construction having the recording film with the Ge-Sb-Te being principal components. The film thickness tolerance of each layer where the effect of the present invention is obtained in the construction of the disk becomes extremely narrow when the recording film thickness is 30 nm or more in the recording film thickness. It becomes difficult to actually make. The most effective structural phase difference reproduction can be effected when $(1 + 2n) \, \pi$, and the reflection index of the recording portion is larger than the reflection index of the non-recording portion if the substrate without grooves is used even in either recording film composition. If the structural phase difference is in the range of $(0.5 \, \text{through} \, 1.5) \, \pi + 2n\pi$, the signal amplitude of approximately 60 percent or more of the maximum signal amplitude when the structural phase difference is $(1+2n) \, \pi$. This is a sufficiently practical value. In the structural phase difference of the $(1.5 \, \text{through} \, 2.5) \, \pi + 2n\pi$, the signal amplitude becomes extremely small. As the structural phase is caused with grooves in the substrate with grooves in it, it does not means that the maximum structural phase difference reproducing amplitude is obtained when the structural phase difference between the recording portion and the non-recording portion is certainly $(1 + 2n) \, \pi$. The structural phase difference between the optimum recording portion and the non-recording portion can be determined considering the groove shape (groove interval, groove width, groove depth and so on) at this time. It is found out hat the structural phase difference between the recording portion and the non-recording portion has only to be within the $(0.5 \, \text{through} \, 1.5) \, \pi + 2n\pi$. When samples the same in the reflection index of the crystal condition are compared with, with the structural phase difference being in the range of $(0.5 \, \text{through} \, 1.5) \, \pi + 2n\pi$, and the structural phase difference being the same, the area of the recording mark where the maximum amplitude is obtained becomes small as the reflection index of the non-crystalline portion is higher than the reflection index of the crystal portion. At this time, the value of the maximum amplitude is not known. It means that the reflection index of the non-crystalline portion is made higher than the reflection index of the crystal portion so as to improve the recording density. As the difference of the crystal, non-crystalline reflection index is larger, the large signal amplitude is obtained with smaller recording marks. When the reflection index of the non-crystalloid is 1.2 times the reflection index of the crystal, the area of the recording mark showing the same maximum signal amplitude becomes approximately 95 percent as compared with the same case in both the reflection indexes, and the substantial contributions with respect to the high density become small. When, in accordance with the invention, the reflection index of the non-crystalloid is 1.3 times the reflection index of the crystal, the area of the recording mark showing the same maximum signal amplitude becomes approximately 80 percent as compared with both the reflection indexes, showing sufficient contributions towards the high density. When the reflection index of the non-crystalloid is twice the reflection index of the crystal, the area of the recording mark showing the same maximum signal amplitude becomes approximately 60 percent as compared with the same case in both the reflection indexes, showing larger contributions towards the higher density.

The samples the same in the reflection index of the crystal condition with the structural phase difference being in the range of $(0.5 \, \text{through} \, 1.5) \, \pi + 2n\pi$, and the structural phase difference being the same. The reflection index of the non-crystalline portion is higher in sample than the reflection index of the crystal portion, and the erasing characteristics wider and superior in the erasing power tolerance are obtained. At the same time, the repeating characteristics frequency of the superior recording/erasing is obtained. It is found out that the noise component of the medium at the reproduction time becomes smaller with the reflection index of the crystal condition (non-recording condition) being made as small as possible. Suppose the reflection index of the crystal condition (non-recording condition) is made too smaller, and the signal amplitude becomes small. It is found out in the actual evaluation of the C/N of the signal that the effect of becoming smaller in the noise component is larger than the ratio of reducing the signal amplitude by the smaller reflection index of the crystal condition. It is found out from the various recording film materials and the various disk composition that the superior reproduction signal quality is obtained if the reflection index at the crystal time is restrained to 15 % or lower. At this time, the structural phase difference between the recording portion and the non-recording portion is set in the range of (0.5 through 1.5) $\pi + 2n\pi$, or the reflection index of the recording portion is set larger than the reflection index of the non-recording portion.

Embodiment 4

$Sb_2Se_3$ is known as a recording film composition having superior recording/erasing characteristics. The optical constant of the Sb2Se3 film is disclosed in, for example, Japanese Patent Laid-Open Publication No. 2-266978. The structural phase change recording medium is optically designed and the sample disk is made with reference to the optical constants of the $Sb_2Se_3$ film disclosed herein.

The construction of the sample disk made in Fig. 5 is shown. The material quality of the substrate is made smooth polycarbonate without grooves. Both the sides of the recording thin film are sandwiched with a dielectric protective layer composed of ZnS-20mol % $SiO_2$. Gold (Au) is used for reflection layer material. The formation of each layer is provided by a sputtering method. Table 3 shows the optical constant (actual measurement value) of each layer. Table 3 is an optical constants with respect to 780 nm in wavelength.

Table 3

| Material Quality | Optical Constants (Refractive Index n, Extinction Coefficient k) | |
|---|---|---|
| Policarbonate | 1.58 | 0.0 |
| ZnS-20mol%$SiO_2$ | 2.10 | 0.0 |
| $Sb_2Se_3$ (Non-Crystalloid) | 3.00 | 0.15 |
| $Sb_2Se_3$ (Crystal) | 4.70 | 0.70 |
| Au | 0.18 | 4.64 |

When the $Sb_2Se_3$ film is used for the recording film, such disk construction as the reflection index of the recording portion becomes three times or more the reflection index of the non-recording portion with the structural phase difference being made larger can be found out. Assume that the film thickness of the ZnS - 20mol % $SiO_2$ protective layer on the substrate side 104 nm, the film thickness of the recording film is 160 nm, the film thickness of the SnS-20mol % $SiO_2$ protective layer on the reflection layer side is 35 nm, the film thickness of the Au reflection layer is 50 nm, the structural phase difference between the recording portion and the non-recording portion is $0.9\pi$, the reflection index of the recording portion is 30 %, the reflection index of the non-recording portion becomes 10 %. In such disk, large signal amplitude is obtained even in too small recording mark. When Sb2Se3 is used in the recording film, the phase difference reproducing construction recording medium of higher free degree can be made.

For example, Table 4 shows the example of the sample construction and the optical characteristics (actual measurement value) of the sample. The recording film thickness at this time is 120 nm, the reflection layer is made of Au and is 50 nm in its film thickness. The structural phase difference is all equal to $0.9\ \pi$ from the samples No. 5 to No. 8, but the reflection index (R1) at the non-crystalloid time / the reflection index (R2) at the crystal time are respectively 1.0, 1.2, 1.3, 2.1. Samples 7 and 8 represent the invention whereas samples 5 and 6 are reference examples.

Table 4

| Sample No. | Substrate Side Film Thickness | Reflection Layer Side Film Thickness | R1(%) | R2(%) | R1/R2 | Structural Phase Difference |
|---|---|---|---|---|---|---|
| 5 | 128nm | 116nm | 38 | 37 | 1.0 | $0.90\pi$ |
| 6 | 52nm | 58nm | 38 | 32 | 1.2 | $0.86\pi$ |
| 7 | 58nm | 58nm | 40 | 30 | 1.3 | $0.90\pi$ |
| 8 | 81nm | 58nm | 48 | 23 | 2.1 | $0.88\pi$ |

An initializing (crystallizing) processing operation is applied upon the recording film whole face in advance by an initializing apparatus using Ar laser upon these media. The semiconductor laser beams of 780 nm in wavelength are irised with a lens system of 0.5 in an aperture number, are applied, focusing upon the recording film, while the medium is being rotated with the linear speed 10 m/s. Beams modulated with a single frequency 10 MHz modulation degree 50 % are applied with various power on the recording film face so as to partially non-crystallize the recording film for effecting a recording operation, and applies the continuous outputs of 1mW so as to detect the reflection beam with a photo detector for effecting a reproducing operation to measure CNR. The recorded/reproduced disk is dismantled. The shape of the recording mark is checked with the use of a transmission electronic microscope. The shape of the recording mark is different with the recording power. Table 5 shows the relation between the recording mark area and the maximum CNR at a time showing the maximum CNR in each sample.

Table 5

| Sample No. | Maximum CNR | Area of Recording Mark Which Becomes Maximum CNR (Relative Ratio With Marck Area of Sample No. 5 Being 1) |
|---|---|---|
| 5 | 52dB | 1.0 |
| 6 | 51dB | 0.95 |
| 7 | 52dB | 0.83 |
| 8 | 51dB | 0.62 |

A disk is made with the recording film thickness, the protective layer thickness, the reflective layer film thickness being varied in it. Signals are recorded. The structural phase difference between the non-crystalline region of the recording medium and the crystal region, and the reflection index of both are checked as follows.

1) When samples the same in reflection index are compared with, the largest signal amplitude is obtained when the structural phase difference is $(1 + 2n)\, \pi$ (n is an integer). If the structural phase difference is in the range of the $(0.5$ through $1.5)\, \pi + 2n\pi$, the signal amplitude of approximately 60 percent or more of the maximum signal amplitude when the structural phase difference is $(1 + 2n)\, \pi$. This is a sufficiently practical value. In the structural phase difference of $(1.5$ through $2.5)\, \pi + 2n\pi$, the signal amplitude becomes extremely small.

2) When the samples the same in the structural phase difference are compared with the structural phase difference being in the range of $(0.5$ through $1.5)\, \pi + 2n\pi$, the area of the recording mark where the maximum CNR is obtained becomes smaller as the reflection index of the non-crystalline portion becomes higher than the reflection index of the crystal portion. The value of the maximum CNR is the same at each sample. This fact means that the recording density is increased by the construction that the reflection index of the non-crystalline portion is higher than the reflection index of the crystal portion. As the difference in the reflection index between the crystal and the non-crystalloid is larger, the large CNR is obtained with the small recording mark. When the structural phase difference is $(1+ 2n)\, \pi$, the maximum CNR becomes maximum. When the reflection index of the non-crystalloid is 1.2 times the reflection index of the crystal, the area of the recording mark showing the same maximum CNR becomes approximately 95 percent as compared with the case where both the reflection indexes are the same, and the substantial contributions with respect to the high density is small. When, in accordance with the invention, the reflection index of the non-crystalloid is 1.3 times the reflection index of the crystal, the area of the recording mark showing the same maximum CNR becomes approximately 80 percent as compared with the same both the reflection indexes, thus showing the sufficient contributions towards the high density. When the reflection index of the non-crystalloid becomes twice the reflection index of the crystal, the area of the recording mark showing the same maximum CNR becomes approximately 60 percent as compared with a case where both the reflection indexes, thus showing large contributions towards high density (Table 4, Table 5).

When the reflection index R2 of the crystal condition becomes too small, the amplitude of the reproduction signal becomes inconveniently too small. When the reflection index R2 of the crystal condition is too large, the light absorption quantity in the recording film becomes small so as to make the sensitivity lower. It is found out from the various experimental results that no problems are caused if R2 is made 80 % or more, and 60 % or less.

3) When samples the same in the reflection index of the crystal condition are compared with the structural phase difference being in the range of the $(0.5$ through $1.5)\, \pi + 2\, n\pi$, and the structural phase difference being the same, the repeating frequency of the recording/erasing operations becomes more as the reflection index of the non-crystalline portion becomes higher than the reflection index of the crystalline portion.

4) After the formation of the recording marks of the same area, the various power is continuously applied to crystallize the recording marks and to erase the signals. The erasing index is measured. Samples the same in the reflection index of the crystal condition are compared with the structural phase difference being in the range of $(0.5$ through $1.5)\, \pi + 2n\pi$, the structural phase difference being the same. As the reflection index of the non-crystalline portion becomes higher than the reflection index of the crystal portion becomes higher in the sample, it is found out that the range of the erasing power where the erasing index (for example - 20dB) becomes constant or more becomes spread, namely, the erasing power range is spread.

The optical constant of the Sb2Se3 is characterized in that the extinction coefficient is small. Therefore, the light is transmitted through even in much thicker film as compared with the recording film with Ge-Sb-Te being principal components. Large structural phase change is shown up to the thickness of 500 nm at maximum nm even in the designing of the structural recording medium. Such construction as the reflection index of the non-crystalline portion becomes higher than the reflection index of the crystal portion exists. The most effective structural phase difference reproduction can be effected when the $(1 + 2n)\,\pi$ and the reflection of the recording portion is larger than the reflection index of the non-recording portion if the substrate without grooves is used even in the either recording film composition. If the structural phase difference is in the range of the $(0.5$ through $1.5)\,\pi + 2n\pi$, the signal amplitude of approximately 60 percent or more of the maximum signal amplitude in a case where the structural phase difference is the $(1 + 2n)\,\pi$ is obtained. This is a sufficiently practical value. In the structural phase difference of $(1.5$ through $2.5)\,\pi + 2n\pi$, the signal amplitude becomes extremely small. As the structural phase is caused with grooves in the grooved substrate, it does not mean that the maximum structural phase difference reproduction amplitude is obtained when the structural phase difference between the recording portion and the non-recording portion is necessary $(1 + 2n)\,\pi$. At this time, the structural phase difference between the optimum recording portion and the non-recording portion can be determined, considering the groove shape (groove interval, groove width, groove depth or the like). It is found out that the structural phase difference between the recording portion and the non-recording portion has only to be in the range of $(0.5$ through $1.5)\,\pi + 2n\pi$. When the samples the same in the reflection index of the crystal condition is compared with the structural phase difference being in the range of $(0.5$ through $1.5)\,\pi + 2n\pi$ and the structural phase difference being the same, the area of the recording mark to be obtained in the maximum amplitude becomes small as the reflection index of the non-crystalline portion becomes higher than the reflection index of the crystal portion. At this time, the value of the maximum amplitude is not known. This fact means that the recording density is raised by the construction that the reflection index of the non-crystalline portion is higher than the crystal portion. As the difference in the reflection index between the crystal and the non- crystalloid is larger, the large signal amplitude is obtained with small recording mark. When the reflection index of the non-crystalloid is 1.2 times the reflection index of the crystal, the area of the recording mark showing the same maximum signal amplitude becomes approximately 95 percent as compared with a case where both the reflection indexes are the same, and the substantial contributions towards the high density is small. When, in accordance with the invention, the reflection index of the non-crystalloid is 1.3 times the reflection of the crystal, the area of the recording mark showing the same maximum signal amplitude becomes approximately 80 percent as compared with a case where both the reflection indexes are the same, showing sufficient contributions towards the high density. Make the reflection index of the non-crystalloid twice the reflection index of the crystal, and the area of the recording mark showing the same maximum signal amplitude becomes approximately 60 percent as compared with a case where both the reflection indexes are the same, showing the large contributions towards the high density.

As the samples the same in the reflection index in the crystal condition are compared with the structural phase difference being in the range of $(0.5$ through $1.5)\,\pi + 2n\pi$, and the structural phase different being the same, erasing characteristics wider and better in the erasing power tolerance is obtained as the reflection index of the non-crystalline portion is higher than the reflection index of the crystal portion in sample. At the same time, the repeating characteristics frequency of the better recording/erasing operations are obtained. The reflection index of the crystal condition (non-recording condition) is made smaller as small as possible, and it is found out that the noise components of the medium at the reproduction time becomes smaller. As the reflection index of the crystal condition (non-recording condition) is made too small, the signal amplitude becomes small. It is found out from the actual evaluation of the C/N of the signal that an effect of becoming small in the noise component is larger than the proportion of reducing in the signal amplitude. It is found out from the examination of the various recording film materials and the various disk construction that the better reproduction signal quality can be obtained when the reflection index at the crystal time is restrained to 15 % or lower. At this time, the structural phase difference of the recording portion and the non-recording portion is set into the range of $(0.5$ through $1.5)\,\pi + 2n\pi$ or the reflection index of the recording portion is set larger than the reflection index of the non-recording portion.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

**Claims**

1. An optical information recording medium for use with an apparatus for reproducing information by the application of a laser beam having a predetermined wavelength, said medium comprising a substrate (7) with prerecorded pits (9) and a reflection layer (8) coated on top of said substrate (7), the reflectivity of the interior of the pits (9) being higher than the reflectivity of the rest of the surface at the wavelength of the laser beam used for reproducing the information,

characterized in that the reflection layer (8) film of the interior of the pit (9) is thicker than the reflection film of the periphery thereof.

2. An apparatus for recording and reproducing information with the application of laser beams of a given wavelength and an optical information recording medium for use with the apparatus,

said optical information recording medium being provided with a substrate (13), at least a protective layer (14), and a recording film (15) which is susceptible of undergoing an optical phase change on the application of a laser beam, said change involving a shift in the optical constants (refractive index n, extinction coefficient k) of the recording film, and

said medium being such that the phase difference between a reproducing laser beam reflected from a unrecorded region and a reproducing laser beam reflected from a recorded mark region of the optical information recording medium lies within the range $(0.5 \text{ through } 1.5)^* \pi + 2i^*\pi$.

where i is an integer,

characterized in that the reflection index R1 of the recorded mark region of the optical information recording medium is at least 1.3 times the reflection index R2 of the unrecorded region at the wavelength of the laser beam for reproducing the recorded information.

3. An apparatus for recording and reproducing information with the application of the laser beams of a given wavelength and an optical medium as defined in claim 2,

where the range of the structural phase difference of the reflection beam of the non-recording region and the recording mark region is

$$(2i + 1)\, \pi,$$

wherein i is an integer.

4. An apparatus for recording and reproducing information with the application of the laser beams of a given wavelength and an optical medium as defined in claim 2,

where R1 is twice R2 or more.

5. An apparatus for recording and reproducing information with the application of the laser beams of a given wavelength and an optical medium as defined in claim 2,

wherein the recording film is composed of a material for reversibly causing optical phase changes onto a condition different in optical constant with the application of laser beams, the principal components of said material are Ge-Sb-Te, and the thickness of the recording film is 40 nm or lower.

6. An apparatus for recording and reproducing information with the application of the laser beams of a given wavelength and an optical medium as defined in claim 5,

where the principal components of the recording film is Ge, Sb, Te, the composition ratio of the principal components is provided within a range represented by

(Ge) x (Sb) y (Te) z:

$$0.10 \leq x \leq 0.35 : 0.10 \leq y$$

$$0.45 \leq z \leq 0.65 : x+y+z=1$$

7. An apparatus for recording and reproducing information with the application of the laser beams of a given wavelength and an optical medium as defined in claim 5,

where the composition ratio of Ge, Sb, Te is provided within the range represented by

$$(Ge_2Sb_2Te_5) \ x \ (GeSb_2Te_4) \ 1\text{-}x$$

$$0 \le x \le 1$$

8.  An apparatus for recording and reproducing information with the application of the laser beams of a given wavelength and an optical medium as defined in claim 2,
    where the recording film is composed of a material for reversibly causing optical phase changes onto a condition different in optical constant with the application of laser beams, the principal components of said material are Sb-Se, and the thickness of the recording film is 500 nm or lower.

**Patentansprüche**

1.  Optisches Informationsaufzeichnungsmedium für eine Vorrichtung zum Wiedergeben von Informationen durch Einsatz eines Laserstrahls mit einer vorbestimmten Wellenlänge, wobei das Medium ein Substrat (7) mit voraufgezeichneten Vertiefungen (9) und einer Reflexionsschicht (8) enthält, die auf der Oberseite des Substrates (7) aufgebracht ist, und wobei bei der Wellenlänge des für die Wiedergabe der Informationen verwendeten Laserstrahls das Reflexionsvermögen im Inneren der Vertiefungen (9) höher ist als das Reflexionsvermögen der verbleibenden Oberfläche,
    **dadurch gekennzeichnet**, daß die Reflexionsschicht (8) im Inneren einer Vertiefung (9) dicker als die Reflexionsschicht in deren Umgebung ist.

2.  Vorrichtung zum Aufzeichnen und Wiedergeben von Informationen unter Einsatz von Laserstrahlen einer gegebenen Wellenlänge und eines optischen Informationsaufzeichnungsmediums für diese Vorrichtung,

    bei der das optische Informationsaufzeichnungsmedium mit einem Substrat (13), zumindest einer Schutzlage (14) und einer Aufzeichnungsschicht (15) versehen ist, die bei Einsatz eines Laserstrahls eine optische Phasenänderung vollziehen kann, wobei die Änderung eine Verschiebung in den optischen Konstanten (Brechungsindex n, Extinktionskoeffizient k) der Aufzeichnungsschicht bewirkt, und bei der das Medium von der Art ist, daß die Phasendifferenz zwischen einem Wiedergabelaserstrahl, der von einem aufzeichnungsfreien Bereich reflektiert wird, und einem Wiedergabelaserstrahl, der von einem aufgezeichneten Markierungsbereich des optischen Informationsaufzeichnungsmediums reflektiert wird, innerhalb des Bereiches (0,5 bis 1,5) $^*\pi + 2i^*\pi$ liegt,
    wobei i eine ganze Zahl ist,

    dadurch gekennzeichnet, daß bei der Wellenlänge des Laserstrahls zum Wiedergeben deraufgezeichneten Informationen der Reflexionsindex R1 des aufgezeichneten Markierungsbereiches des optischen Informationsaufzeichnungsmediums zumindest das 1,3-fache des Reflexionsindex R2 des aufzeichnungsfreien Bereiches beträgt.

3.  Vorrichtung zum Aufzeichnen und Wiedergeben von Informationen unter Einsatz von Laserstrahlen einer gegebenen Wellenlänge und eines optischen Mediums gemäß Anspruch 2,
    wobei der Bereich der strukturellen Phasendifferenz des Reflexionsstrahles des aufzeichnungsfreien Bereiches und des aufgezeichneten Markierungsbereiches

$$(2i + 1) \ \pi$$

    ist, wobei i eine ganze Zahl ist.

4.  Vorrichtung zum Aufzeichnen und Wiedergeben von Informationen unter Einsatz von Laserstrahlen einer gegebenen Wellenlänge und eines optischen Mediums gemäß Anspruch 2,
    wobei R1 das Zweifache oder mehr von R2 beträgt.

5.  Vorrichtung zum Aufzeichnen und Wiedergeben von Informationen unter Einsatz von Laserstrahlen einer gegebenen Wellenlänge und eines optischen Mediums gemäß Anspruch 2,
    wobei die Aufzeichnungsschicht aus einem Material besteht, das bei Einsatz von Laserstrahlen optischen Phasenänderungen mit Unterschieden in den optischen Konstanten reversibel unterliegt, wobei die Hauptbestandteile dieses Materials Ge-Sb-Te sind und wobei die Dicke der Aufzeichnungsschicht 40 nm oder geringer ist.

6. Vorrichtung zum Aufzeichnen und Wiedergeben von Informationen unter Einsatz von Laserstrahlen einer gegebenen Wellenlänge und eines optischen Mediums gemäß Anspruch 5,
wobei die Hauptbestandteile der Aufzeichnungsschicht Ge, Sb, Te sind und wobei das Zusammensetzungsverhältnis der Hauptbestandteile innerhalb eines Bereiches vorgesehen ist, der wiedergegeben wird durch:
(Ge) x (Sb) y (Te) z:

$$0{,}10 \leq x \leq 0{,}35 : 0{,}10 \leq y$$

$$0{,}45 \leq z \leq 0{,}65 : x+y+z=1$$

7. Vorrichtung zum Aufzeichnen und Wiedergeben von Informationen unter Einsatz von Laserstrahlen einer gegebenen Wellenlänge und eines optischen Mediums gemäß Anspruch 5,
wobei das Zusammensetzungsverhältnis von Ge, Sb, Te innerhalb des Bereiches vorgesehen ist, der wiedergegeben ist durch:
$(Ge_2Sb_2Te_5)$ x $(GeSb_2Te_4)$ 1-x

$$0 \leq x \leq 1$$

8. Vorrichtung zum Aufzeichnen und Wiedergeben von Informationen unter Einsatz von Laserstrahlen einer gegebenen Wellenlänge und eines optischen Mediums gemäß Anspruch 2,
wobei die Aufzeichnungsschicht aus einem Material gebildet ist, welches bei Einsatz von Laserstrahlen zu optischen Phasenänderungen mit Unterschieden in den optischen Konstanten reversibel in der Lage ist, und wobei die Hauptbestandteile des Materials Sb-Se sind und wobei die Dicke der Aufzeichnungsschicht 500 nm oder geringer ist.

## Revendications

1. Support d'enregistrement optique d'informations destiné à être utilisé avec un dispositif destiné à reproduire des informations grâce à l'application d'un faisceau laser présentant une longueur d'onde prédéterminée, ledit support comprenant un substrat (7) comportant des microcuvettes préenregistrées (9) et une couche réfléchissante (8) appliquées sur le dessus dudit substrat (7), le facteur de réflexion de l'intérieur des microcuvettes (9) étant plus élevé que le facteur de réflexion du reste de la surface à la longueur d'onde du faisceau laser utilisé pour reproduire les informations,
caractérisé en ce que le film de la couche réfléchissante (8) de l'intérieur de la microcuvette (9) est plus épais que le film réfléchissant de la périphérie de celle-ci.

2. Dispositif destiné à enregistrer et reproduire des informations grâce à l'application de faisceaux laser d'une longueur d'onde prédéterminée, et support d'enregistrement optique d'informations destiné à être utilisé avec le dispositif,

ledit support d'enregistrement optique d'informations étant doté d'un substrat (13), d'au moins une couche de protection (14), et d'un film d'enregistrement (15) qui est susceptible de subir une variation de phase optique lors de l'application d'un faisceau laser, ladite variation impliquant un décalage des constantes optiques (indice de réfraction n, coefficient d'extinction k) du film d'enregistrement, et
ledit support étant tel que la différence de phase entre un faisceau laser de reproduction réfléchi à partir d'une région non enregistrée et un faisceau laser de reproduction réfléchi à partir d'une région de repère enregistrée du support d'enregistrement optique d'informations est comprise dans la plage de $(0{,}5$ à $1{,}5) * \pi + 2 i * \pi$, où i est un nombre entier,

caractérisé en ce que l'indice de réflexion R1 de la région de repère enregistrée du support d'enregistrement optique d'informations est au moins 1,3 fois l'indice de réflexion R2 de la région non enregistrée à la longueur d'onde du faisceau laser destiné à reproduire les informations enregistrées.

**3.** Dispositif destiné à enregistrer et reproduire des informations grâce à l'application de faisceaux laser d'une longueur d'onde donnée et support optique selon la revendication 2,
où la plage de la différence de phase optique du faisceau réfléchi pour la région de non-enregistrement et la région de repère d'enregistrement est

$$(2i + 1)\pi,$$

où i est un nombre entier.

**4.** Dispositif destiné à enregistrer et reproduire des informations grâce à l'application de faisceaux laser d'une longueur d'onde donnée et support optique selon la revendication 2,
où R1 est le double de R2 ou davantage.

**5.** Dispositif destiné à enregistrer et reproduire des informations grâce à l'application de faisceaux laser d'une longueur d'onde donnée et support optique selon la revendication 2,
où le film d'enregistrement est composé d'un matériau permettant de provoquer de façon réversible des variations de phase optiques vers un état présentant une constante optique différente grâce à l'application de faisceaux laser, les principaux composants dudit matériau sont Ge-Sb-Te, et l'épaisseur du film d'enregistrement est de 40 nm ou moins.

**6.** Dispositif destiné à enregistrer et reproduire des informations grâce à l'application de faisceaux laser d'une longueur d'onde donnée et support optique selon la revendication 5,
où les composants principaux du film d'enregistrement sont Ge-Sb-Te, le rapport de composition des composants principaux est compris à l'intérieur d'une plage représentée par
$(Ge) x (Sb) y (Te) z$

$$0,10 \leq x \leq 0,35 \qquad 0,10 \leq y$$

$$0,45 \leq z \leq 0,65 \qquad x + y + z = 1$$

**7.** Dispositif destiné à enregistrer et reproduire des informations grâce à l'application de faisceaux laser d'une longueur d'onde donnée et support optique selon la revendication 5,
où le rapport de composition de Ge, Sb, Te est de façon souhaitable compris à l'intérieur de la plage représentée par
$(Ge_2Sb_2Te_5) x (GeSb_2Te_5) 1-x$

$$0 \leq x \leq 1$$

**8.** Dispositif destiné à enregistrer et reproduire des informations grâce à l'application de faisceaux laser d'une longueur d'onde donnée et support optique selon la revendication 2,
où le film d'enregistrement est composé d'un matériau permettant de provoquer de façon réversible des variations de phase optiques vers un état présentant une constante optique différente, grâce à l'application de faisceaux laser, les composants principaux dudit matériau sont Sb-Se, et l'épaisseur du film d'enregistrement est de 500 nm ou moins.

*Fig. 1*

(a)

(b)

# Fig. 2

(a)

(b)

moving direction of
laser spot

*Fig. 3*

*Fig. 4*

Fig. 5

laser beam

20

13
14
15
16
17
18
19

# Fig. 6

# Fig. 7

| conventional | invention |
|---|---|
| phase difference : $\pi$<br><br>$R1 = R2$ | phase difference : $\pi$<br><br>$R1 > R2$ |

## Fig. 8

interference filter

light source

film

mirror

sample

interference fringes

crystal

$l_1$

$l$

non-crystal

## Fig. 9

## Fig. 10

$$(Ge_x Sb_y Te_z)$$

$$0.10 \leqq x \leqq 0.35 \qquad 0.10 \leqq y$$

$$0.45 \leqq z \leqq 0.65 \qquad x + y + z = 1$$